# DEMANDE DE BREVET EUROPEEN

(11) **EP 1 228 933 A1**
(43) Date de publication de la demande: **07.08.2002**
(21) Numéro de dépôt: 02290227.4
(22) Date de dépôt: 31.01.2002
(51) Int. Cl.: B60S 1/34

(54) **Dispositif de fixation d'un bras de support de balai d'essuie-glace**

(30) Priorité: 01.02.2001 FR 0101362
(71) Demandeur: Peugeot Citroen Automobiles SA, 92200 Neuilly sur Seine (FR)
(72) Inventeur: Henry, Brice, 25200 Montbeliard (FR)
(74) Mandataire: Bentz, Jean-Paul

(57) **Abrégé**

Ce dispositif de fixation d'un bras (10) de support de balai d'essuie-glace de véhicule automobile sur un arbre moteur (12), comprend une embase (24) destinée à reposer sur une portée (16) pratiquée sur l'arbre moteur, un moyeu (26) qui est emboîté dans un logement de forme complémentaire ménagé dans le bras de support avec un jeu autorisant un réglage de la position angulaire du bras et qui est pourvu d'une surface d'appui sur une surface d'appui complémentaire du bras, et des moyens de serrage (28) du bras contre l'embase, l'embase (24) et le moyeu (26) étant destinés à être montés de manière fixe en rotation sur l'arbre moteur.

Les surfaces d'appui du moyeu et du bras sont pourvues d'irrégularités de surface adaptées pour engendrer un effort de frottement apte à s'opposer à un déplacement angulaire du bras (10) lorsqu'il est soumis, avant serrage, à un effort prédéterminé.

## Description

La présente invention concerne un dispositif de fixation d'un bras de support de balai d'essuie-glace de véhicule automobile sur un arbre moteur.

Elle se rapporte également à un bras de support de balai d'essuie-glace de véhicule automobile équipé d'un tel dispositif de fixation.

Plus particulièrement, l'invention concerne un dispositif de fixation d'un bras de support de balai d'essuie-glace de véhicule automobile sur un arbre moteur d'entraînement du bras, du type comprenant une embase destinée à reposer sur une portée pratiquée sur l'arbre moteur, un moyeu qui est emboîté dans un logement de forme complémentaire ménagé dans le bras de support avec un jeu autorisant un réglage de la position angulaire du bras et qui est pourvu d'une surface d'appui sur laquelle repose une surface d'appui complémentaire du bras, et des moyens de serrage du bras contre l'embase, l'embase et le moyeu étant destinés à être montés de manière fixe en rotation sur l'arbre moteur.

Ce type de dispositif de fixation, qui autorise un déplacement angulaire de quelques degrés du bras de support autour de l'arbre moteur permet un réglage précis des essuie-glaces sur le pare-brise, ainsi qu'une bonne perpendicularité de ces derniers.

Ces dispositifs permettent donc de conférer aux essuie-glaces des performances optimales.

Ce type de dispositif présente cependant un inconvénient majeur, relatif au fait que, après réglage et avant serrage, l'opérateur doit maintenir le bras en position jusqu'à ce que le serrage soit suffisant pour le maintenir en position, afin d'éviter que la position du bras soit déréglée.

Le but de l'invention est de palier cet inconvénient.

Elle a donc pour objet un dispositif de fixation du type précité, essentiellement caractérisé en ce que les surfaces d'appui du moyeu et du bras sont pourvues d'irrégularités de surface adaptées pour engendrer un effort de frottement apte à s'opposer à un déplacement angulaire du bras lorsqu'il est soumis, avant serrage complet, à un effort prédéterminé.

Ce dispositif de fixation peut également comporter une ou plusieurs des caractéristiques suivantes, prises isolément ou selon toutes les combinaisons techniquement possibles :
- Les surfaces d'appui comportent des stries ;
- Les surfaces d'appui comportent des surfaces granitées ;
- Les surfaces d'appui sont constituées par des pans inclinés pratiqués dans le moyeu, d'une part, et dans le bras, d'autre part ;
- Le moyeu comporte une première partie globalement circulaire par laquelle il vient se monter sur l'arbre moteur, pourvue en périphérie desdits pans inclinés, et une deuxième partie élastiquement déformable, de forme allongée, et en saillie radiale à partir de la première partie ;
- La première partie du moyeu est dotée de butées de limitation du déplacement angulaire du moyeu, en saillie radiale.

L'invention a également pour objet un bras de support de balai d'essuie-glace pour véhicule automobile, caractérisé en ce qu'il est pourvu d'un dispositif de fixation tel que défini ci-dessus.

D'autres buts, caractéristiques et avantages du dispositif de fixation selon l'invention ressortiront de la description suivante, donnée uniquement à titre d'exemple et faite en référence aux dessins annexés sur lesquels :
- La figure 1 est une vue en coupe axiale d'un arbre moteur sur lequel est fixé un bras de support de balai d'essuie-glace, au moyen d'un dispositif de fixation conforme à l'invention ;
- La figure 2 est une vue en coupe selon la ligne 2-2 de la figure 1 ;
- La figure 3 est une vue de l'une des extrémités du bras de support visible sur la figure 2 ;
- La figure 4 est une vue en coupe selon la ligne 4-4 du bras de la figure 3 ;
- La figure 5 est une vue de dessus du moyeu du dispositif de fixation conforme à l'invention ; et
- La figure 6 est une vue en coupe selon la ligne 6-6 du moyeu de la figure 5.

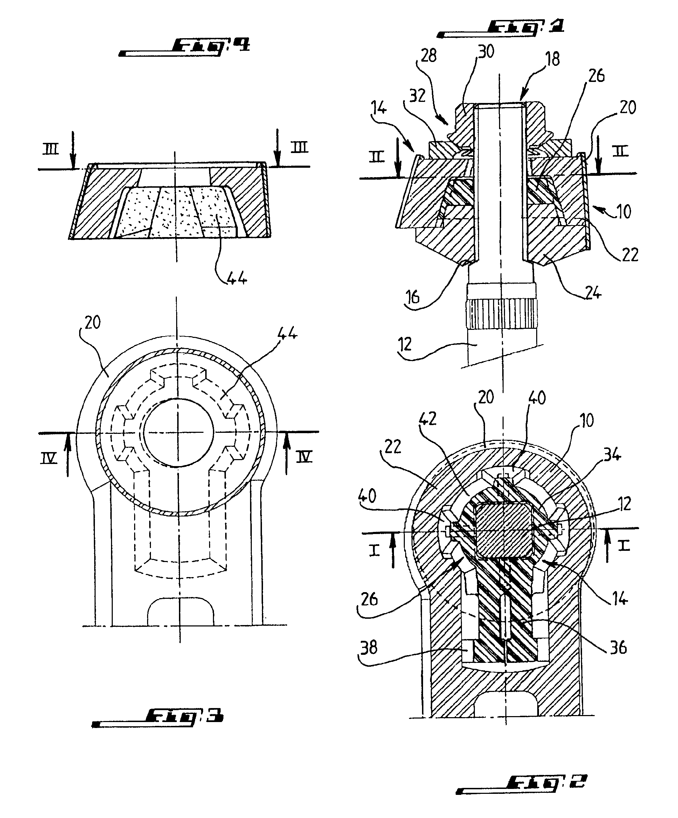

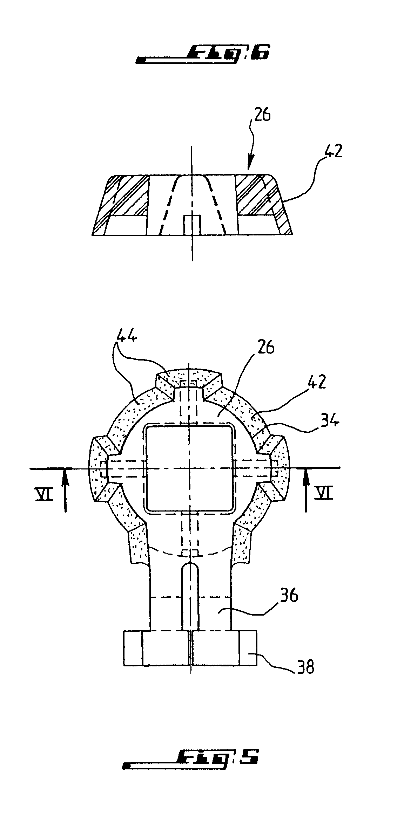

Sur les figures 1 et 2, on a représenté un assemblage d'un bras 10 de support de balai d'essuie-glace pour véhicule automobile et d'un arbre moteur 12, au moyen d'un dispositif de fixation selon l'invention, désigné par la référence numérique générale 14.

Comme cela est classique, et dans l'exemple de réalisation représenté sur ces figures, l'arbre moteur 12 a une forme générale tubulaire à base carrée et est pourvu d'une portée 16 sur laquelle repose le bras 10, par intermédiaire du dispositif de fixation 14, et d'une zone d'extrémité mâle filetée 18.

Le bras 10 de support de balai d'essuie-glace comporte, quant à lui, un boîtier 20 dans lequel est fixé, par tout moyen approprié non représenté, un embout 22 par exemple en matériau plastique.

En variante, le boîtier 20 du bras et l'embout 22 sont réalisés en une seule pièce monobloc.

En ce qui concerne le dispositif de fixation 14, celui-ci est essentiellement constitué d'une embase 24 reposant sur la portée 16 de l'arbre moteur 12, d'un moyeu 26 en matériau élastiquement déformable (dans l'exemple représentée), par exemple en matière plastique, emboîté dans un logement pratiqué dans l'embout 22 et de moyens de serrage 28 du bras 10 contre l'embase 24, constitués d'un écrou 30 coopérant avec l'extrémité filetée 18 de l'arbre moteur 12 et d'une rondelle 32 prenant appui contre le bras 10.

L'embase 24 et le moyeu 26 sont chacun pourvus d'un passage axial de forme complémentaire de celui de l'arbre moteur 12 de manière à être monté de manière fixe en rotation sur l'arbre 12 et à être entraîné par ce dernier. Par exemple, les passage axiaux de l'embase et du moyeu et l'arbre moteur sont pourvus de cannelures axiales complémentaires.

En se référant plus spécifiquement à la figure 2, le moyeu 26 est emboîté par complémentarité de forme dans le logement pratiqué dans l'embout 22 avec un jeu autorisant un déplacement angulaire de quelques degrés du bras par rapport au moyeu 26 de manière à permettre, lors du montage, un réglage de la position angulaire du bras et donc un réglage de la position du balai d'essuie-glace sur le pare-brise.

A cet effet, le moyeu 26 comporte une première partie 34 de forme globalement circulaire dans laquelle est pratiqué le passage servant à son montage sur l'arbre moteur 12 et une deuxième partie 36 de forme générale allongée se présentant sous la forme de deux pattes généralement parallèles et élastiquement déformables, pourvues chacune d'un bourrelet d'extrémité, tel que 38, en appui contre le bord du logement de l'embout 22.

En variante le moyeu peut être dépourvu de la seconde partie 36.

La première partie 34 du moyeu 26 est pourvue de butées, telles que 40, en saillie radiale et déplaçables dans des gorges, telles que 42, pratiquées dans le moyeu 22 pour constituer des moyens de limitation du déplacement angulaire du bras 10.

Comme on le voit également sur les figures 3 à 6, l'embout 22 et le moyeu 26 sont pourvus de surfaces d'appui complémentaires par lesquelles ils reposent l'un sur l'autre, avant serrage de l'ensemble au moyen de l'écrou 30.

Ces surfaces d'appui sont constituées par des pans inclinés, tel que 44, pratiqués d'une part sur la périphérie de la première partie 34 du moyeu 26 et, d'autre part, dans l'embout 22, le long de la paroi du logement de réception du moyeu 26.

Conformément à l'invention, ces surfaces d'appui complémentaires sont chacune pourvues d'irrégularités de surface, représentées par des surfaces grisées sur les figures 4 et 5, aptes à engendrer un effort de frottement entre le moyeu 26 et l'embout 22 suffisant pour s'opposer à un déplacement angulaire du bras lorsqu'il est soumis, après réglage, et avant serrage complet, à un effort tendant à dérégler le bras.

Ces irrégularités de surface peuvent être réalisées sous la forme de tout état de surface approprié pour l'utilisation envisagée, par exemple sous la forme de stries, de surfaces granitées réalisée à l'aide de toute technique appropriée, par exemple par électroérosion, moulage, usinage, attaque chimique, ...

Ces états de surface spécifiques sont choisis de manière à autoriser un déplacement angulaire du bras par rapport au moyeu 26 lorsqu'il est soumis à un effort prédéterminé, supérieur à l'effort de frottement engendré par la friction des surfaces d'appui en regard, tout en interdisant un tel mouvement lorsque le bras est soumis à un effort inférieur.

On choisit les irrégularités de surface de telle sorte que l'effort de frottement engendré soit à même de s'opposer au couple exercé par le bras sous l'action de son propre poids et au couple exercé lors du serrage. L'effort de frottement est également à même de s'opposer à l'éventuel couple de rappel exercé par l'éventuelle seconde partie 36 élastique du moyeu 26 après déplacement du bras par rapport à sa position initiale de référence.

Au contraire, les irrégularités de surface sont choisies de manière à autoriser un glissement des surfaces d'appui les unes contre les autres de manière à permettre un réglage manuel de la position du bras.

Ainsi, par exemple, les irrégularités de surface sont choisies de manière à autoriser un glissement réciproque des surfaces d'appui pour des couples exercés supérieurs à 7,5 N.m, ce qui correspond à un effort de deux kilos exercé au trois-quarts de la longueur d'un bras de support de balais d'essuie glace à partir de l'arbre moteur, en considérant un bras de 0,5 mètre de long, tout en empêchant un mouvement engendré par un couple inférieur à 5,5 N.m.

Pour procéder à l'assemblage du bras sur l'arbre moteur 12, il convient simplement d'insérer l'embase 24 sur l'arbre 12 jusqu'à ce qu'elle vienne en butée sur la portée 16, de monter le bras 10 pourvu du moyeu 26 sur l'embase 24 puis de régler précisément le positionnement angulaire du bras.

Après réglage, le positionnement du bras est conservé sous l'effet de l'effort de friction engendré par les surfaces d'appui complémentaires du moyeu et du bras. Le serrage de l'ensemble peut alors être effectué sans avoir à maintenir le bras de support.

On notera que l'invention n'est pas limitée au mode de réalisation décrit.

En effet, le moyeu et le bras peuvent être montés avec interposition d'une pièce intermédiaire rapportée fixe par rapport au bras et comportant une surface tournée vers le moyeu pourvue des irrégularités de surface et donc, dans ce cas, considérée comme faisant partie du bras, ou fixe par rapport au moyeu et comportant une surface tournée vers le bras pourvue des irrégularités de surface, et donc considérée comme faisant partie du moyeu.

## Revendications

1. Dispositif de fixation d'un bras (10) de support de balai d'essuie-glace de véhicule automobile sur un arbre moteur (12) d'entraînement du bras, comprenant une embase (24) destinée à reposer sur une portée (16) pratiquée sur l'arbre moteur, un moyeu (26) qui est emboîté dans un logement de forme complémentaire ménagé dans le bras de support avec un jeu autorisant un réglage de la position angulaire du bras et qui est pourvu d'une surface d'appui (44) sur laquelle repose une surface d'appui (44) complémentaire du bras, et des moyens (28) de serrage du bras contre l'embase, l'embase (24) et le moyeu (26) étant destinés à être montés de manière fixe en rotation sur l'arbre moteur, **caractérisé en ce que** les surfaces d'appui (44) respectives du moyeu et du bras sont pourvues d'irrégularités de surface adaptées pour engendrer un effort de frottement apte à s'opposer à un déplacement angulaire du bras (10) lorsqu'il est soumis, avant serrage complet, à un effort prédéterminé.

2. Dispositif de fixation selon la revendication 1, **caractérisé en ce que** les surface d'appui (44) comportent des stries.

3. Dispositif de fixation selon l'une des revendications 1 et 2, **caractérisé en ce que** les surface d'appui (44) comportent des surfaces granitées.

4. Dispositif de fixation selon l'une quelconque des revendications 1 à 3, **caractérisé en ce que** les surfaces d'appui (44) sont constituées par des pans inclinés pratiqués dans le moyeu (26), d'une part, et dans le bras (10), d'autre part.

5. Dispositif de fixation selon la revendication 4, **caractérisé en ce que** le moyeu (26) comporte une première partie (34) globalement circulaire par laquelle il vient se monter sur l'arbre moteur, pourvue en périphérie desdits pans inclinés, et une deuxième partie (36) élastiquement déformable, de forme allongée, et en saillie radiale à partir de la première partie.

6. Dispositif de fixation selon la revendication 5, **caractérisé en ce que** la première partie (34) du moyeu est dotée de butées (40) de limitation du déplacement angulaire du moyeu, en saillie radiale.

7. Bras de support de balai d'essuie-glace pour véhicule automobile, **caractérisé en ce qu'**il est pourvu d'un dispositif de fixation (14) selon l'une quelconque des revendications 1 à 6.
